# EUROPEAN PATENT SPECIFICATION

(11) **EP 2 116 488 B1**
(45) Date of publication and mention of the grant of the patent: **29.02.2012**
(21) Application number: 08155642.5
(22) Date of filing: 05.05.2008
(51) Int. Cl.: B65G 15/60, B65G 15/62, B65G 39/16

(54) **Conveyor belt device with a particular belt-steering device**
Förderbandvorrichtung mit spezieller Bandlenkungsvorrichtung
Dispositif de courroie transporteuse avec un dispositif de direction de courroie spécifique

(43) Date of publication of application: 11.11.2009
(73) Proprietor: W/M Systems B.V., 2661 EP Bergschenhoek (NL)
(72) Inventor: De Jager, Maarten, 2587 TX's-Gravenhage (NL); Brugman, Thomas Gerardus, 2715 AN Zoetermeer (NL)
(74) Representative: van Westenbrugge, Andries

(56) References cited:
- WO-A-2004/106198
- US-A- 2 725 757
- US-A- 4 917 232

## Description

The present invention relates to a conveyor belt device comprising a frame with a support for a belt and the objects to be moved with the latter, and an endless belt, a drive for said belt, reversing rollers for said belt, and steering rollers which determine the position of said belt on said frame. A conveyor belt device of this type is generally known in the prior art. In particular with relatively long belts, positioning the belt with respect to the drive may cause problems. When such relatively long belts move with respect to the frame, this tends not always to be in the desired location. Therefore, the use of steering rollers is proposed in the prior art. As a rule, these steering rollers can only be arranged in the return run as the conveying surface has to be kept free for the objects to be moved, see US-A-2 725 757, for example. It has been found that in the case of a relatively long belt, there is a need for further control of the conveying belt run of the belt in a conveying device.

It is an object of the present invention to provide a conveyor belt device for a relatively long conveyor belt, in which the position of the belt with respect to the frame can be accurately controlled.

This object is achieved an above-described conveyor belt device in that said steering rollers engage with the conveying belt run, have an axis of rotation which is substantially perpendicular to the plane of the conveying belt run, at least partially extend in an interruption in said support in the longitudinal direction, which steering rollers are each provided with a groove, with a side wall of said groove engaging with the conveying belt run, said side wall extending at an acute angle (α) with respect to the plane of movement of the conveying belt run, with the distance (b) between the mutually opposite bottoms of the grooves of said steering rollers being substantially greater than the width (a) of the conveying belt run.

According to the present invention, the steering rollers are provided in the conveying run of the belt; that is to say, contrary to the prior art, it is the conveying belt run which is corrected and not the return run.

In addition, according to the present invention, the steering rollers are embodied in a particular way. The latter are each provided with a groove having an oblique side wall over which a part of the respective belt run runs. However, the distance between the bottoms of the grooves of two mutually opposite steering rollers is greater than the width of the respective belt run. In other words, the belt run is not closed in between the bottoms of the grooves of the steering rollers, but can still move between the latter to a limited extent. That is to say, the respective belt run finds a way between two mutually opposite steering rollers. If the belt run moves towards the axis of rotation of one steering roller, the belt run will, as a result of the sloping design of the respective part of said steering roller over which the belt run runs, experience an increasingly large force in the direction away from said axis the closer said belt run moves towards the bottom of the respective groove, while, for opposite reasons, the belt run will at the same time experience an increasingly smaller force in the direction away from the axis of the steering roller situated opposite. Thus, a stable balance is achieved between two mutually opposite steering rollers. As the bottom of the groove does not press onto the side of the belt, a shortening of the service life of the belt, as occurs with prior art edge rollers, is prevented. The support for the conveying belt run and objects to be conveyed is interrupted for the steering rollers and the belt run is deflected to a greater or lesser extent by the oblique side walls of the grooves of said steering rollers from the edges of said interruption.

The invention relates in particular to a conveyor belt device for conveying objects which are wider than the respective belt. This results in a saving for the cost of the belt. In such a case, the steering rollers will be in the plane of transport of an object to be conveyed. According to an advantageous embodiment of the invention, supporting rollers are used at the edges of the interruption in the support for the conveying belt run and objects to be moved in order to deflect the belt from its plane of movement to a plane in which the grooves of the steering rollers are situated. If such supporting rollers are used both in the upstream and downstream direction, the upper surface of the steering rollers is preferably level with the upper surface of the conveying belt run. As a result thereof, the respective conveying belt run will be deflected from its plane of movement by the grooves of the steering rollers which are in a different plane to the upper side of the supporting rollers. Using said supporting rollers creates advantageous steering forces as a result of the fact that, due to the uneven deflection of the relevant belt run by the oblique side walls of the mutually opposite grooves of the steering rollers, the angle of contact of the relevant belt run with the supporting rollers will vary asymmetrically across the width of the belt run.

The above-described acute angle, at which the side wall of the groove of the steering roller, with which the belt engages extends, is preferably between 10° and 45°. This angle may vary, depending on the distance of the side wall to the axis of rotation of the relevant steering roller. In such a case, the angle preferably becomes increasingly larger as the distance to this axis becomes smaller and may, in an extreme case, even be parallel to this axis. As a result thereof, a progressive action of the steering force acting on the belt is achieved.

According to a particular embodiment of the invention, the length of the conveying run of the belt is at least 100x and more particularly at least 300x greater than the width.

Viewed in the direction of transport, the steering rollers may be arranged opposite one another and offset with respect to one another. Preferably, however, they are in a plane which is perpendicular to the direction of transport. The steering rollers and, more particularly, the axes of rotation thereof are preferably situated in a plane which is perpendicular to the direction of transport and in the centre of the interruption in the support for the conveying belt run and objects to be moved. However, it is also possible to arrange them at a different angle and/or move them out of the centre of this interruption, which means that the belt no longer engages with the groove on either side of a steering roller in a symmetrical manner, so that the sum of the friction forces which are exerted on said belt by said steering roller results in a force which is directed away from the axis of rotation of said steering roller and thus increases the steering effect. In this case, the steering effect is no longer identical for opposite directions of transport.

The embodiment can be used at any suitable position along a conveying belt run and also at several positions along a conveying belt run.

The invention can be used in a non-conveying belt run and can, optionally, also be used in the associated conveying belt run.

The invention can be used both on straight sections and in bends of belts. If a belt makes a bend in its plane of movement, it is sufficient to use steering rollers on one side of said belt.

The invention can also be used in a conveyor device in which the conveying belt run does not move in one plane, in which the steering rollers keep said belt run tensioned and in position in an inside bend and objects to be moved can pass freely.

A supporting roller may also be a reversing roller of the conveyor belt device.

If the design of an existing conveyor belt device allows for it, steering rollers and, if desired, also one or more supporting rollers may be added to such device.

The invention will be explained in more detail below with reference to exemplary embodiments illustrated in the figures, in which:
Fig. 1 shows a general diagrammatic view of an example of a conveyor belt device according to the invention;
Fig. 2 shows a cross section along line II-II in Fig. 1;
Fig. 3 shows a longitudinal section along line III-III in Fig. 1;
Figs. 4a, b show a perspective view of a detail of the construction according to the invention;
Fig. 5 shows a longitudinal section with, diagrammatically, an engagement surface of a variant of the invention;
Fig. 6 shows a variant of the position of a steering roller according to the invention;
Fig. 7 shows a variant of a steering roller according to the invention; and
Fig. 8 shows a cross section of a variant of the invention.

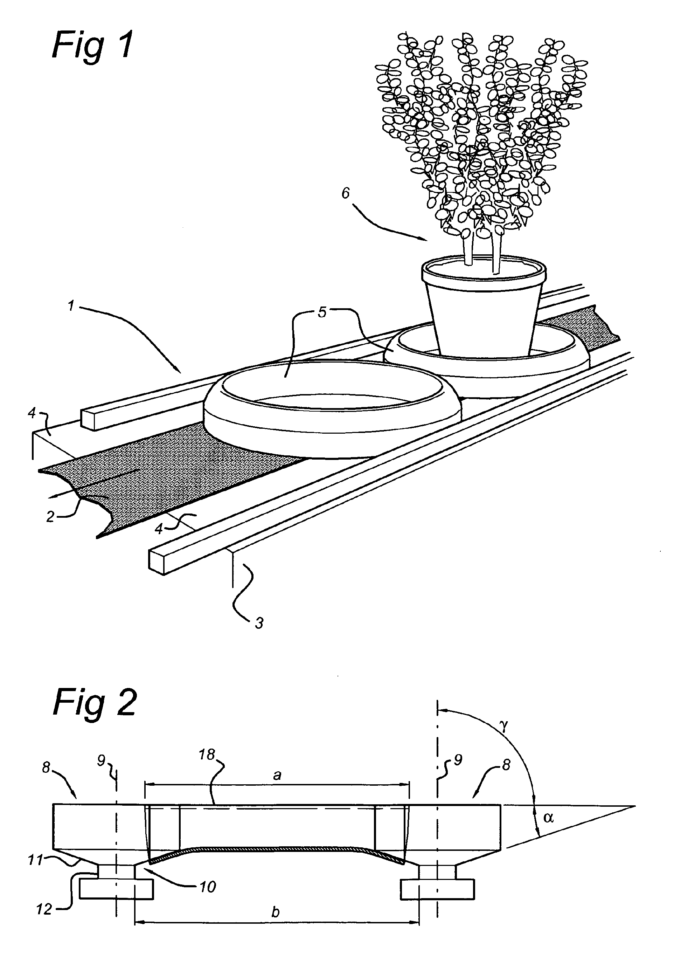

In Fig. 1, a conveyor belt device is diagrammatically illustrated and denoted overall by reference numeral 1. It comprises a relatively narrow belt of which only the conveying run 2 is indicated. The latter moves over a frame 3 in the usual way via reversing rollers and is provided with a drive for the belt in any suitable way. The frame 3 has a support 4 for the belt 2 and objects 6 to be moved on top of it, such as pot plants held in dishes 5.

Although the invention is described above as a conveyor belt device with a relatively narrow belt, it should be understood that the present invention can also be used for any belt conveyor.

According to the present invention, steering rollers are present. As can be seen in Fig. 2, the steering rollers 8 can be rotated about an axis of rotation 9 which is substantially perpendicular to the plane of transport. Each steering roller comprises a base body which is provided with a groove 10, and has a bottom 12 and an oblique wall 11. In the present exemplary embodiment, the steering rollers are preferably arranged directly opposite one another and it should be understood that it is possible, for example at a bend, to provide steering rollers on only one side of the belt and/or to provide the steering rollers, viewed in top view in the direction of transport, offset with respect to one another. The figures show that the conveying run 2 of the belt is guided in the grooves 10 of the steering rollers. The width of run 2 is denoted by the letter a and the distance between the bottoms 12 of opposite steering rollers is denoted by the letter b. The difference between a and b is preferably at least 1 cm. As a result, the belt will not be closed in by the bottoms 12 of the steering rollers when the belt moves sideways, but run 2 will lie on the oblique walls 11. These oblique parts are at an angle α to the plane of transport 18 illustrated in Fig. 2 and this angle is preferably between 10° and 45°.

The more of belt run 2 that is situated on the oblique part 11 of, for example, the left-hand steering roller, the larger the force is with which the belt run 2 is forced to the right-hand side. Since, at the same time, less of band run 2 is situated on the oblique part 11 of the right-hand steering roller and the force with which the belt run 2 is forced to the left-hand side decreases, the two steering rollers will automatically exert a steering effect during the conveying movement, which keeps the run 2 in the desired position (in an oscillating manner).

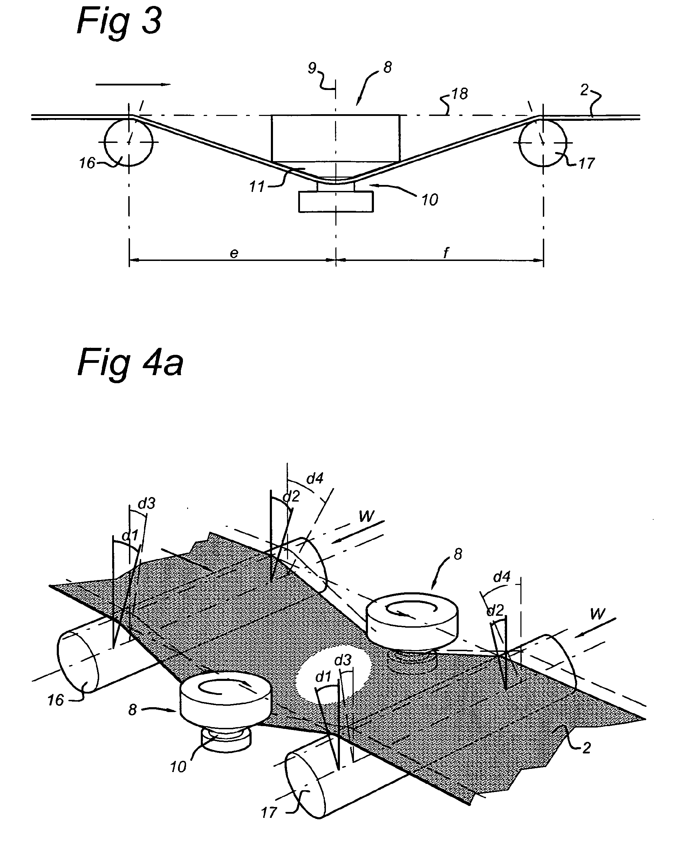

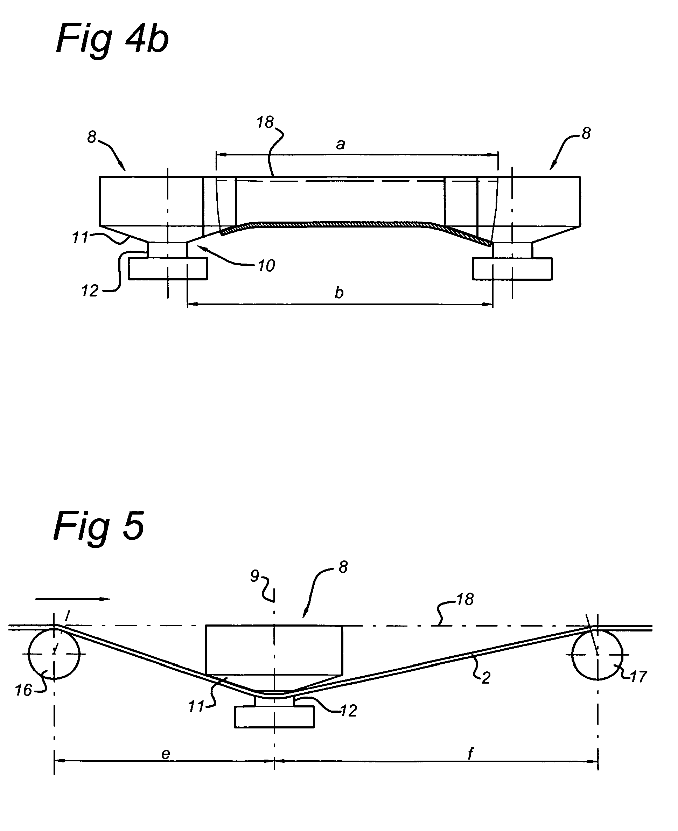

As Fig. 3 shows, the oblique wall 11 of a steering roller 8 is always in a different plane to the plane of movement of the engaged belt run in order to allow a pressure force to be created between the wall and said belt run, and, as a result, the belt run is deflected at the edges of the interruption in its support from its plane of movement. In the interest of a long service life of the belt, supporting rollers 16 and 17 are preferably used for this deflecting action. In the present exemplary embodiment, the belt 2 is significantly narrower than the plane of transport of the dish 5. This makes it necessary to move the steering rollers in such a manner that the dish can be moved over the steering roller 8. Fig. 3 shows the details of the arrangement thereof. As can be seen, the embodiment is such that supporting rollers 16 and 17 are provided and that line 18, which forms the plane of transport of the belt run 2 outside the area of the steering rollers, is level with the upper side of the steering roller 8. Deflecting the belt run 2 via the supporting rollers 16 and 17 to the wall 11 of the steering roller 8 firstly leads to a greater degree of contact with the wall 11 of the steering rollers which results in a more pronounced correction, and, on the other hand, at the same time to a significant correction by the supporting rollers, as is illustrated by means of Fig. 4.

Figs. 4a, b show a steering device comprising two steering rollers 8 and the supporting rollers 16 and 17 which, viewed in the plane of transport over on two main axes, are arranged symmetrically. The belt run 2 passes over the supporting rollers 16 and 17 at an angle of contact d. As long as the belt run is in the ideal position, the angle of contact has a symmetric profile across the width of said belt run with equal boundary values d1 and d2. If the belt run deviates from the ideal position, it is moved further out of its original plane of movement to a greater degree by the one steering roller than by the other steering roller, which results in the angle of contact across the width of the belt run varying asymmetrically with unequal boundary d3 and d4. As is known from the prior art, an angle of contact of a belt which, across the width of the belt is a-symmetrical, on a roller results in a friction force in the direction of the smallest angle of contact, denoted in the figure by the letter w. This leads to a significant corrective effect on the belt in the direction of the ideal position.

In the exemplary embodiments illustrated in the Figs. 2, 3 and 4, the axis of rotation of the steering roller 9 is perpendicular to the plane of transport in all directions and is situated in the centre of the interruption of the plane of transport, which is a result of the interruption in the support for the conveying belt run and objects to be moved.

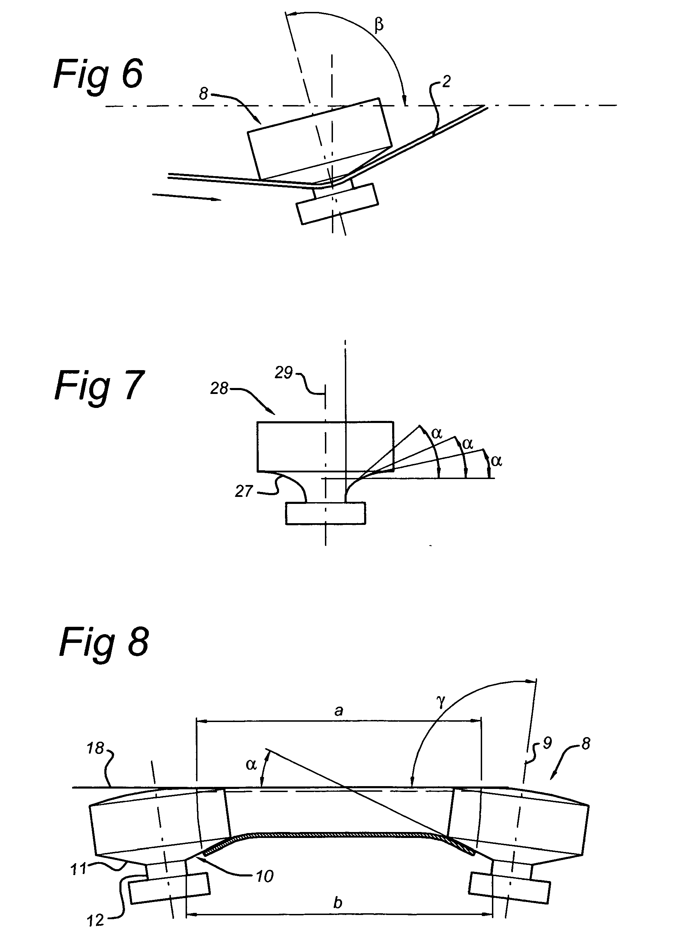

Fig. 5 shows that it is possible to place the steering roller 8 closer to the upstream supporting roller 16 than to the downstream supporting roller. This results in a greater degree of correction at the entry part of the steering roller than at the exit part. The same effect can be achieved by adjusting the position of the axes of rotation of the steering rollers, as illustrated in Fig. 6, where in this case a different angle β with respect to the plane of transport has been chosen which is preferably greater than 95°.

Both in the embodiment illustrated in Fig. 5 and in that illustrated in Fig. 6, the degree of contact with the steering roller is greater at the entry part of the belt run than at the exit part.

Due to the fact that the belt run moves in a straight line in the direction of the arrow and the wall moves in a rotating manner, there are resolved movements perpendicular with respect to the direction of transport of the belt run and friction forces between belt run and side wall related thereto. In the case of the symmetrical arrangements, such as those in Figs. 2, 3 and 4, these forces on one and the same steering roller perpendicular to the direction of transport of the belt run cancel each other out, but in the case of asymmetrical arrangements, such as in Figs. 5 and 6, this results, at the given direction of rotation, in a force which is directed away from the axis of rotation of the steering roller, which increases the steering effect of the steering roller.

As the steering effect is reduced when the direction of transport is reversed, an embodiment according to Figs. 5 and 6 is more suitable for conveyors with substantially one direction of transport.

Fig. 7 shows a variant of the steering roller in which the above-described angle α varies depending on the position of wall part 27 of steering roller 28 with respect to the axis 29. The curved shape results in a gradually increasing corrective force which is exerted by the steering roller on the belt run.

Fig. 8 shows an arrangement in which, contrary to the arrangement in Fig. 2, the axes of rotation 9 of the mutually opposite steering rollers 8 are not perpendicular with respect to the plane of transport 18, but form an angle γ with the latter which is greater than 90° and preferably greater than 95°. The upper side of the steering rollers is not flat, but conical and forms an angle with respect to the axis of rotation of the same magnitude as the abovementioned angle γ. Both upper sides now have a common tangent line which is level with the plane of transport. As a result thereof, a passing object only rests on a part of the steering rollers which moves in the direction of transport, so that this object is driven and wear resulting from contact between the object and the steering roller is minimized.

As is clear from the above, the lower part of the steering roller, that is to say the other wall of the groove, is not relevant and this may therefore have any suitable embodiment.

Upon reading the above description, those skilled in the art will immediately be able to think of variants. These are within the scope of the attached claims, in which rights are expressly requested for the subject matter of the subclaim rights, separate from the independent claim.

## Claims

1. Conveyor belt device (1) comprising a frame (3) with a support (4) for a belt and the objects to be moved with the latter, and an endless belt (2), a drive for said belt, reversing rollers for said belt, and steering rollers (8) which determine the position of said belt on said frame, **characterized in that** said steering rollers engage with the conveying belt run, have an axis of rotation (9) which is substantially perpendicular to the plane of the conveying belt run, at least partially extend in an interruption in said support (4) in the longitudinal direction, said steering rollers (8) being each provided with a groove (10), with a side wall (11) of said groove engaging with the conveying belt run, said side wall extending at an acute angle (α) with respect to the plane of movement of the conveying belt run, with the distance (b) between the mutually opposite bottoms of the grooves (12) of said steering rollers being substantially greater than the width (a) of the conveying belt run.

2. Conveyor belt device according to Claim 1, wherein the distance (b) between the bottoms (12) of the grooves of the mutually opposite steering rollers being at least 1 cm greater than the width (a) of the conveying belt run.

3. Conveyor belt device according to one of the preceding claims, wherein the length of the conveying run of the belt is at least 100x greater than the width.

4. Conveyor belt device according to one of the preceding claims, wherein the steering rollers are arranged directly opposite one another in the direction perpendicular to the direction of movement of the conveying belt run.

5. Conveyor belt device according to one of the preceding claims, in which, in said interruption in the support, a supporting roller (16, 17) having an axis of rotation which is substantially perpendicular to the direction of movement of the conveying belt run, and situated in a plane parallel to the plane of movement of said belt run, is provided near said steering rollers (8), over which supporting roller (16, 17) said belt run is deflected from its plane of movement to the side walls (11) of said steering rollers.

6. Conveyor belt device according to Claim 5, wherein the rolling movement of said belt run over said supporting roller increases the position-determining effect of said supporting rollers.

7. Conveyor belt device according to Claim 5 or 6, wherein the upper side of said belt run at the location of said supporting roller (16, 17) is substantially in the same plane as the upper side of a steering roller (8) which is situated near said supporting roller.

8. Conveyor belt device according to one of Claims 5, 6 or 7, comprising supporting rollers (16, 17) which are provided in front of and behind the steering rollers in the direction of movement of the conveyor belt.

9. Conveyor belt device according to one of the preceding claims, wherein the angle (α) which said side wall makes with said plane parallel to the central part of the conveying belt run increases in the direction of the axis of rotation (9) of said steering roller (8).

10. Conveyor belt device according to one of the preceding claims, wherein the angle (β) of the axis of rotation (9) of said steering roller (8) with respect to the plane of movement of the conveying belt run has a value which differs substantially from 90° in the direction of movement of said belt run.

11. Conveyor belt device according to Claim 10, wherein said angle (β) deviates at least 5° from 90°.

12. Conveyor belt device according to one of the preceding claims, wherein the angle (γ) of the axis of rotation (9) of said steering roller (8) with respect to the plane of movement of the conveying belt run perpendicular to the direction of movement of said belt run has a value which is substantially different from 90°.

13. Conveyor belt device according to Claim 12, wherein the upper side of said steering roller (8) has a conical surface with an angle with respect to said axis of rotation (9) which is of the same magnitude as the angle (γ) of said axis of rotation with respect to the plane of movement of said conveying belt run.

14. Conveyor belt device according to one of Claims 12 or 13, wherein said angle (γ) deviates at least 5 from 90°.

15. Conveyor belt device according to one of the preceding claims, wherein steering rollers (8) according to one of the preceding claims engage with the non-conveying belt run.

16. Conveyor belt device according to one of the preceding claims, wherein a number of steering rollers (8) according to one of the preceding claims, distributed across the length of said device, engage with said conveyor belt.

17. Conveyor belt device according to one of the preceding claims, wherein said conveying belt run moves in several planes and steering rollers (8) according to one of the preceding claims engage with said conveyor belt at an angle between two planes of movement which is smaller than 180°.

18. Conveyor belt device according to one of the preceding claims, wherein the width of said support (4) is substantially greater than the width (a) of the conveying belt run.

19. Conveyor belt device according to one of the preceding claims, embodied for receiving objects (5) which have a substantially larger dimension perpendicular to the direction of transport than the width (a) of the conveying belt run.

20. Conveyor belt device according to one of the preceding claims, embodied for receiving plants placed in dishes.

## Patentansprüche

1. Förderbandeinheit (1), die Folgendes umfasst: einen Unterbau (3) mit einer Auflage (4) für ein Band und die mit diesem zu bewegenden Gegenstände, und ein Endlosband (2), einen Antrieb für das Band, Umkehrrollen für das Band und Lenkrollen (8), die die Position des Bandes auf dem Unterbau bestimmen, **dadurch gekennzeichnet, dass** die Lenkrollen an der befördernden Bandstrecke angreifen, eine Drehachse (9) haben, die im Wesentlichen senkrecht zur Ebene der befördernden Bandstrecke ist, sich zumindest teilweise in eine Unterbrechung in der Auflage (4) in der Längsrichtung erstrecken, wobei die Lenkrollen (8) jeweils mit einer Nut (10) versehen sind, wobei eine Seitenwand (11) der Nut an der befördernden Bandstrecke angreift, wobei sich die Seitenwand unter einem spitzen Winkel (α) bezüglich der Bewegungsebene der befördernden Bandstrecke erstreckt und der Abstand (b) zwischen den jeweils gegenüberliegenden Fußbereichen der Nuten (12) der Lenkrollen wesentlich größer ist als die Breite (a) der befördernden Bandstrecke.

2. Förderband nach Anspruch 1, wobei der Abstand (b) zwischen den Fußbereichen (12) der Nuten der sich jeweils gegenüberliegenden Lenkrollen mindestens um 1 cm größer ist als die Breite (a) der befördernden Bandstrecke.

3. Förderbandeinheit nach einem der vorhergehenden Ansprüche, wobei die Länge der befördernden Bandstrecke mindestens 100-mal größer als die Breite ist.

4. Förderbandvorrichtung nach einem der vorhergehenden Ansprüche, wobei die Lenkrollen in der zur Bewegungsrichtung der befördernden Bandstrecke senkrechten Richtung direkt einander gegenüberliegend angeordnet sind.

5. Förderbandeinheit nach einem der vorhergehenden Ansprüche, bei der in der Unterbrechung in der Auflage nahe den Lenkrollen (8) eine Stützrolle (16, 17) mit einer Drehachse angeordnet ist, die im Wesentlichen senkrecht zur Bewegungsrichtung der befördernden Bandstrecke ist und in einer zur Bewegungsebene der Bandstrecke parallelen Ebene liegt, wobei über die Stützrolle (16, 17) die Bandstrecke aus ihrer Bewegungsebene zu den Seitenwänden (11) der Lenkrollen abgelenkt wird.

6. Förderbandeinheit nach Anspruch 5, wobei die Abrollbewegung der Bandstrecke über die Stützrolle die Positionsbestimmungswirkung der Stützrollen verstärkt.

7. Förderbandeinheit nach Anspruch 5 oder 6, wobei die Oberseite der Bandstrecke an der Stelle der Stützrolle (16, 17) im Wesentlichen in derselben Ebene wie die Oberseite einer Lenkrolle (8) liegt, die sich nahe der Stützrolle befindet.

8. Förderbandeinheit nach einem der Ansprüche 5, 6 oder 7, die Stützrollen (16, 17) umfasst, welche in Bewegungsrichtung des Förderbands vor und hinter den Lenkrollen vorgesehen sind.

9. Förderbandeinheit nach einem der vorhergehenden Ansprüche, wobei der Winkel (α), den die Seitenwand mit der zum mittleren Teil der befördernden Bandstrecke parallelen Ebene einschließt, in Richtung zur Drehachse (9) der Lenkrolle (8) zunimmt.

10. Förderbandvorrichtung nach einem der vorhergehenden Ansprüche, wobei der Winkel (β) der Drehachse (9) der Lenkrolle (8) bezüglich der Bewegungsebene der befördernden Bandstrecke einen Wert hat, der in Bewegungsrichtung der Bandstrecke im Wesentlichen von 90° abweicht.

11. Förderbandeinheit nach Anspruch 10, wobei der Winkel (β) mindestens um 5° von 90° abweicht.

12. Förderbandeinheit nach einem der vorhergehenden Ansprüche, wobei der Winkel (γ) der Drehachse (9) der Lenkrolle (8) bezüglich der Bewegungsebene der befördernden Bandstrecke senkrecht zur Bewegungsrichtung der Bandstrecke einen Wert hat, der im Wesentlichen von 90° abweicht.

13. Förderbandeinheit nach Anspruch 12, wobei die Oberseite der Lenkrolle (8) eine konische Oberfläche mit einem Winkel bezüglich der Drehachse (9) hat, der von derselben Größe ist wie der Winkel (γ) der Drehachse bezüglich der Bewegungsebene der befördernden Bandstrecke.

14. Förderbandeinheit nach einem der Ansprüche 12 oder 13, wobei der Winkel (γ) mindestens um 5° von 90° abweicht.

15. Förderbandeinheit nach einem der vorhergehenden Ansprüche, wobei Lenkrollen (8) nach einem der vorhergehenden Ansprüche an der nicht befördernden Bandstrecke angreifen.

16. Förderbandeinheit nach einem der vorhergehenden Ansprüche, wobei eine Anzahl von Lenkrollen (8) nach einem der vorhergehenden Ansprüche, die über die Länge der Vorrichtung verteilt sind, an dem Förderband angreifen.

17. Förderbandeinheit nach einem der vorhergehenden Ansprüche, wobei sich die befördernde Bandstrecke in mehreren Ebenen bewegt und Lenkrollen (8) nach einem der vorhergehenden Ansprüche an dem Förderband unter einem Winkel zwischen zwei Bewegungsebenen angreifen, der kleiner als 180° ist.

18. Förderbandeinheit nach einem der vorhergehenden Ansprüche, wobei die Breite der Auflage (4) im Wesentlichen größer als die Breite (a) der befördernden Bandstrecke ist.

19. Förderbandeinheit nach einem der vorhergehenden Ansprüche, die zur Aufnahme von Gegenständen (5) ausgelegt ist, die senkrecht zur Transportrichtung eine im Wesentlichen größere Abmessung haben als die Breite (a) der befördernden Bandstrecke.

20. Förderbandeinheit nach einem der vorhergehenden Ansprüche, die zur Aufnahme von in Schalen gesetzten Pflanzen ausgelegt ist.

## Revendications

1. Dispositif de courroie transporteuse (1) comprenant un cadre (3) avec un support (4) pour une courroie et les obj ets à déplacer avec cette dernière, et une courroie sans fin (2), un entraînement pour ladite courroie, des cylindres de renversement pour ladite courroie, et des galets de direction (8) qui déterminent la position de ladite courroie sur ledit cadre, **caractérisé en ce que** lesdits galets de direction s'engagent avec la course de transport de la courroie, présentent un axe de rotation (9) sensiblement perpendiculaire au plan de la course de transport de la courroie, s'étendent au moins en partie dans une interruption dudit support (4) dans la direction longitudinale, lesdits galets de direction (8) étant chacun dotés d'une rainure (10), une paroi latérale (11) de ladite rainure s'engageant avec la course de transport de la courroie, ladite paroi latérale s'étendant selon un angle aigu (α) par rapport au plan de mouvement de la course de transport de la courroie, la distance (b) entre les fonds mutuellement opposés des rainures (12) desdits galets de direction étant sensiblement supérieure à la largeur (a) de la course de transport de la courroie.

2. Dispositif de courroie transporteuse selon la revendication 1, dans lequel la distance (b) entre les fonds (12) des rainures des galets de direction mutuellement opposés est supérieure d'au moins 1 cm à la largeur (a) de la course de transport de la de courroie.

3. Dispositif de courroie transporteuse selon l'une quelconque des revendications précédentes, dans lequel la longueur de la course de transport de la courroie est au moins 100 fois plus grande que la largeur.

4. Dispositif de courroie transporteuse selon l'une quelconque des revendications précédentes, dans lequel les galets de direction sont disposés directement à l'opposé l'un de l'autre dans la direction perpendiculaire à la direction de mouvement de la course de transport de la courroie.

5. Dispositif de courroie transporteuse selon l'une quelconque des revendications précédentes, dans lequel un galet support (16, 17), présentant un axe de rotation sensiblement perpendiculaire à la direction de mouvement de la course de transport de la courroie et situé dans un plan parallèle au plan de mouvement de ladite course de courroie, est prévu dans ladite interruption du support près desdits galets de direction (8), sur lequel galet support (16, 17) ladite course de la courroie est déviée de son plan de mouvement vers les parois latérales (11) desdits galets de direction.

6. Dispositif de courroie transporteuse selon la revendication 5, dans lequel le mouvement de roulement de ladite course de courroie sur ledit rouleau augmente l'effet de détermination de la position desdits galets supports.

7. Dispositif de courroie transporteuse selon la revendication 5 ou 6, dans lequel le côté supérieur de ladite course de courroie à l'endroit dudit galet support (16, 17) est sensiblement dans le même plan que le côté supérieur d'un galet de direction (8) situé près dudit galet support.

8. Dispositif de courroie transporteuse selon l'une quelconque des revendications 5, 6 ou 7, comprenant les galets supports (16, 17) qui sont prévus en face et derrière les galets de direction dans la direction de mouvement de la courroie transporteuse.

9. Dispositif de courroie transporteuse selon l'une quelconque des revendications précédentes, dans lequel l'angle (α) que forme ladite paroi latérale avec ledit plan parallèle à la partie centrale de la course de transport de la courroie augmente dans la direction de l'axe de rotation (9) dudit galet de direction (8).

10. Dispositif de courroie transporteuse selon l'une quelconque des revendications précédentes, dans lequel l'angle (β) de l'axe de rotation (9) dudit galet de direction (8) par rapport au plan de mouvement de la course de transport de la courroie présente une valeur qui diffère sensiblement de 90° dans la direction de mouvement de ladite course de la courroie.

11. Dispositif de courroie transporteuse selon la revendication 10, dans lequel ledit angle (β) dévie au moins de 5° de 90°.

12. Dispositif de courroie transporteuse selon l'une quelconque des revendications précédentes, dans lequel l'angle (γ) de l'axe de rotation (9) dudit galet de direction (8) par rapport au plan de mouvement de la course de transport de la courroie perpendiculairement à la direction de mouvement de ladite course de courroie présente une valeur sensiblement différente de 90°.

13. Dispositif de courroie transporteuse selon la revendication 12, dans lequel le côté supérieur dudit galet de direction (8) présente une surface conique avec un angle par rapport audit axe de rotation (9) de la même grandeur que l'angle (γ) dudit axe de rotation par rapport au plan de mouvement de ladite course de transport de la courroie.

14. Dispositif de courroie transporteuse selon l'une quelconque des revendications 12 ou 13, dans lequel ledit angle (γ) dévie au moins de 5° de 90°.

15. Dispositif de courroie transporteuse selon l'une quelconque des revendications précédentes, dans lequel des galets de direction (8) selon l'une quelconque des revendications précédentes s'engagent avec la course de non transport de la courroie.

16. Dispositif de courroie transporteuse selon l'une quelconque des revendications précédentes, dans lequel de nombreux galets de direction (8) selon l'une quelconque des revendications précédentes, distribués sur la longueur dudit dispositif, s'engagent avec ladite courroie transporteuse.

17. Dispositif de courroie transporteuse selon l'une quelconque des revendications précédentes, dans lequel ladite course de transport de la courroie se déplace dans plusieurs plans et des galets de direction (8) selon l'une quelconque des revendications précédentes s'engagent avec ladite courroie transporteuse au niveau d'un angle entre deux plans de mouvement qui est inférieur à 180°.

18. Dispositif de courroie transporteuse selon l'une quelconque des revendications précédentes, dans lequel la largeur dudit support (4) est sensiblement supérieure à la largeur (a) de la course de transport de la courroie.

19. Dispositif de courroie transporteuse selon l'une quelconque des revendications précédente réalisé pour la réception d'objets (5) qui présentent une dimension sensiblement plus grande perpendiculairement à la direction de transport que la largeur (a) de la course de transport de la courroie.

20. Dispositif de courroie transporteuse selon l'une quelconque des revendications précédentes réalisé pour la réception de plantes placées en cuvettes.
